# EUROPÄISCHE PATENTSCHRIFT

(11) **EP 0 785 060 B1**
(45) Veröffentlichungstag und Bekanntmachung des Hinweises auf die Patenterteilung: **01.10.2003**
(21) Anmeldenummer: 97100085.6
(22) Anmeldetag: 04.01.1997
(51) Int. Cl.: B29C 45/76, B29C 45/42

(54) **Verfahren zum Spritzgiessen von Werkstücken**
Injection moulding process
Procédé de moulage par injection

(30) Priorität: 16.01.1996 DE 19601280
(43) Veröffentlichungstag der Anmeldung: 23.07.1997
(73) Patentinhaber: HEKUMA GmbH, 85386 Eching (DE)
(72) Erfinder: Herbst, Richard, 85386 Eching (DE)
(74) Vertreter: Klingseisen, Franz, Dipl.-Ing.

(56) Entgegenhaltungen:
- DE-A- 4 219 687
- DE-B- 1 301 014
- DE-C- 4 003 372
- US-A- 4 841 364
- PATENT ABSTRACTS OF JAPAN vol. 018, no. 552 (P-1815), 20. Oktober 1994 (1994-10-20) & JP 06 195765 A (RICOH CO LTD), 15. Juli 1994 (1994-07-15)
- PATENT ABSTRACTS OF JAPAN vol. 1996, no. 01, 31. Januar 1996 (1996-01-31) & JP 07 237256 A (OMRON CORP), 12. September 1995 (1995-09-12)

## Beschreibung

Die Erfindung betrifft ein Verfahren zum Spritzgießen von Werkstücken mit einem Werkzeug einer Kunststoff-Spritzgießmaschine.

Ein Verfahren der vorstehend genannten Art ist allgemein bekannt.

Beim Spritzgießen von Werkstücken entsteht das Problem, daß beim Anfahren der Maschine zunächst Sorge dafür getragen werden muß, daß die Maschine richtig eingerichtet wird, ehe die Maschine im Automatikbetrieb bei hoher Betriebsgeschwindigkeit betrieben werden kann. Das Problem stellt sich insbesondere beim Betrieb von Kunststoff-Spritzgießmaschinen, bei denen die Werkzeuge mit einer Vielzahl von Formhohlräumen versehen sind, so daß bei jedem Spritzyklus eine entsprechende Vielzahl von Werkstücken hergestellt werden kann.

Beim Anfahren der Maschine können dabei Fehler unterschiedlicher Art auftreten, die bspw. dadurch verursacht werden, daß der noch nicht vollständig auf Betriebstemperatur befindliche Kunststoff nicht in ausreichender Menge in sämtliche Formhohlräume des Werkzeugs gelangt. Dies kann dadurch auftreten, daß das Werkzeug in seinen Randbereichen noch nicht auf Betriebstemperatur ist.

Wenn derartige Fehler beim Anfahren der Maschine auftreten, äußert sich dies dadurch, daß einzelne Formhohlräume nur teilweise oder auch gar nicht ausgespritzt werden. Entsprechend werden dann auch keine oder unvollkommene Werkstücke entformt, bspw. durch die im Werkzeug vorhandenen Auswerferstifte. Es kann dann insbesondere bei unvollkommen gespritzten Werkstücken geschehen, daß das Werkstück sich im Formhohlraum schräg stellt und verklemmt, so daß es beim erneuten Schließen der Werkzeughälften zu entsprechenden Kollisionen und Beschädigungen kommen kann.

Bei Kunststoff-Spritzgießmaschinen mit Werkzeugen, die eine Vielzahl von Formhohlräumen aufweisen, ist es ferner bekannt, Handlingsysteme für das Entformen und/oder Entnehmen der Werkstücke einzusetzen, die mit sogenannten Werkstückträgersystemen versehen sind. Unter einem Werkzeugträgersystem versteht man dabei eine Aufnahme für eine Vielzahl von Werkstücken. Mit einem Werkzeugträgersystem innerhalb eines Handlingsystems ist es möglich, z.B. sämtliche Werkstücke aus allen Formhohlräumen des Werkzeugs zu entnehmen, sobald das Werkzeug geöffnet wird. Das Werkstückträgersystem kann dabei entweder in Öffnungsrichtung des Werkzeugs an die Formhohlräume heranfahren und die Werkstücke dann aus den Formhohlräumen entnehmen, alternativ ist es aber auch möglich, das Werkstückträgersystem nur seitlich einfahren zu lassen und die Werkstücke aus den Formhohlräumen an das Werkstückträgersystem zu übergeben, bspw. mit vorfahrbaren Auswerferstiften.

In der Praxis geht der Einrichter einer Kunststoff-Spritzgießmaschine so vor, daß er beim Anfahren der Maschine zunächst einige Zyklen "von Hand" fährt. Dies bedeutet, daß ein ggf. vorhandenes Handlingsystem zunächst außer Betrieb bleibt und in einem ersten Spritzzyklus die Formhohlräume des Werkzeugs ausgespritzt werden. Das Werkzeug wird dann geöffnet und die Werkstücke werden mittels der Auswerferstifte ausgeworfen. Sie fallen dann nach unten in einen bereitgestellten Behälter. Der Einrichter kann nun optisch überprüfen, ob die Werkstücke von der gewünschten Qualität sind und ob sich im Behälter genauso viele Werkstücke befinden, wie Formhohlräume vorhanden sind. Je nach Ergebnis der Überprüfung wird der Einrichter dann noch einen oder mehrere Probezyklen fahren, und zwar solange, bis er feststellt, daß in sämtlichen Formhohlräumen Werkstücke der gewünschten Qualität erzeugt werden.

Erst wenn dieses Ergebnis feststeht, wird das Handlingsystem zugeschaltet, so daß bei den nachfolgenden Zyklen die Werkstükke mittels des Handlingsystems aus dem Werkzeug entnommen werden.

Auch diese Phase des Anfahrbetriebes kann zunächst mit verminderter Arbeitsgeschwindigkeit der Maschine und des Handlingsystems ablaufen, wie dies z.B. in der DE 42 19 687 C2 beschrieben ist. Wenn schließlich feststeht, daß alle Aggregate fehlerfrei arbeiten, kann der Einrichter die Maschine auf Automatikbetrieb umschalten und mit voller Arbeitsgeschwindigkeit betreiben.

Das zuvor geschilderte Einrichten der Maschine ist, wie leicht einsehbar, relativ mühselig und zeitaufwendig, zumal dann, wenn die im Probebetrieb entformten Werkstücke eine große Anzahl haben und zunächst von Hand überprüft werden müssen. Der Einrichter muß dazu den Behälter vom Boden der Maschine aufnehmen, die Werkstücke zählen, von Hand in eine Position bringen, in der er sie optisch überprüfen kann und anschließend entsorgen.

Aus dem Dokument JP 06 195 765 A ist ein System zum Spritzgießen von optischen Disks bekannt. Die optischen Disks werden mittels eines Greifers aus einem Werkzeug einer Spritzgießmaschine entnommen. Während der Überführbewegung vom Werkzeug zu einer Abfördereinrichtung werden die Disks überprüft und in "gut" oder "schlecht" unterteilt. Je nach Ergebnis der Überprüfung werden die Disks dann auf einen Abförderer für gute bzw. einen Abförderer für schlechte Disks aufgesetzt. Gleichzeitig findet eine Protokollierung der gefundenen Fehler statt.

Im Dokument DE 13 01 014 B ist eine Spritzgießmaschine beschrieben, bei der auf einer Werkzeughälfte eine optische Abtastvorrichtung angeordnet ist. Mit dieser Abtastvorrichtung wird nach dem Auswerfen überprüft, ob das Werkstück tatsächlich ausgeworfen wurde. Wenn dies nicht der Fall ist, wird Alarm gegeben und der automatische Betrieb der Spritzgießmaschine unterbrochen.

Aus dem Dokument US 4 841 364 A ist eine ähnliche Spritzgießmaschine beschrieben, bei der ebenfalls Abtasteinrichtungen, nämlich Videokameras, den Zustand der Werkzeughälften nach dem Auswerfen der gespritzten Werkstücke überprüfen. Bei der beschriebenen Maschine wird zunächst, d.h. bevor die Spritzgießmaschine in Dauerbetrieb geht, ein "Lernschritt" vorgesehen. Während dieses Lernschritts erfassen die Videokameras zunächst das leere Werkzeug und es wird dann ein Probeschuß durchgeführt, nach dessen Abschluß die Videokameras das noch im Werkzeug befindliche Werkstück überprüfen, vorausgesetzt, daß dieses zuvor für gut befunden wurde. Nach Abschluß dieses Lernschritts setzt dann der normale Betrieb der Spritzgießmaschine ein. Die Überwachung erfolgt bei jedem Spritzgießvorgang während des Betriebes der Spritzgießmaschine und der Betrieb der Maschine wird unterbrochen sowie Alarm gegeben, wenn eine Fehlfunktion festgestellt wird.

Eine Optimierung der Spritzgieß-ßedingungen durch probeweises Spritzen ist auch aus der DE-A-4 025 221 und der EP-A-0 368 300 bekannt.

Der Erfindung liegt demgegenüber die Aufgabe zugrunde, ein Verfahren der eingangs genannten Art dahingehend weiterzubilden, daß der Anfahrvorgang der Spritzgießmaschine deutlich verkürzt wird.

Diese Aufgabe wird erfindungsgemäß durch die Merkmale der anliegenden Anspruchs 1 gelöst.

Die der Erfindung zugrundeliegende Aufgabe wird auf diese Weise vollkommen gelöst.

Bevorzugte Ausgestaltungen der Erfindung sind in dem abhängigen Ausprüchen angegeben.

Wenn nämlich bereits während des Anfahrens der Kunststoffspritzgießmaschine das Handlingsystem mit dem Werkstückträgersystem eingesetzt wird, so kann der Einrichter den Zustand der Werkstücke leichter überprüfen. Auf dem Werkstückträgersystem sind die Werkstücke nämlich in übersichtlicher Form angeordnet, so daß sie nicht einzeln in eine bestimmte Lage zum Betrachten gedreht werden müssen. Ferner fällt am Werkstückträgersystem sofort auf, wenn eines der Werkstücke fehlt, weil der zugehörige Formhohlraum überhaupt nicht ausgespritzt wurde. Erreicht wird all dies durch eine überraschend einfache Maßnahme, nämlich den Einsatz des Werkstückträgersystems bereits beim Anfahren der Maschine, wobei lediglich das Werkstückträgersystem in einer bestimmten Position angehalten werden muß, oder in mehreren Positionen, damit der Einrichter eine optische oder sonstige Kontrolle vornehmen kann.

All dies läßt sich in bekannte Kunststoff-Spritzgießmaschinen mit Handlingsystemen ohne größere Probleme integrieren, weil nur wenige Eingriffe in die Steuerung der Maschine erforderlich sind. Gleichwohl wird erfindungsgemäß eine deutliche Verkürzung der Anfahrzeit erreicht, so daß die Auslastung der Maschine entsprechend erhöht werden kann.

Bei einer bevorzugten Ausgestaltung der Erfindung wird das Werkstückträgersystem in einer Position zwischen zwei Werkzeughälften angehalten.

Diese Maßnahme hat den Vorteil, daß die geringsten Eingriffe in die Steuerung erforderlich sind und daß die Werkstücke unmittelbar nach dem Entformen überprüft werden können, wenn sie sich noch innerhalb des Werkzeugs, d.h. zwischen den beiden Werkzeughälften eines üblichen Werkzeugs befinden.

Diese Maßnahme hat den Vorteil, daß eine noch bessere Beobachtung der Werkstücke oder sonstige Kontrolle der Werkstücke mittels Meßgeräten und dergleichen möglich ist.

Besonders bevorzugt ist bei diesem Ausführungsbeispiel, wenn die Werkzeughälften in Schritt f) um einen ersten Abstand und in Schritt k) um einen zweiten, kleineren Abstand in der Offenstellung beabstandet sind.

Diese Maßnahme hat den Vorteil, daß nur während des Anfahrens der Maschine ein etwas größerer Öffnungshub des Werkzeugs eingestellt werden muß, der eine bessere und zuverlässigere Betrachtung der Werkstücke durch den Einrichter gestattet. Sobald diese erste Phase abgeschlossen ist, kann bei erhöhter Arbeitsgeschwindigkeit und damit verminderter Zykluszeit der Maschine auch der öffnungsschub entsprechend verringert werden.

Darüber hinaus ist es auch möglich, das Werkstückträgersystem in einer Position neben dem Werkzeug anzuhalten.

Diese Maßnahme hat den Vorteil, daß eine noch bessere Beobachtung der Werkstücke oder sonstige Kontrolle der Werkstücke mittels Meßgeräten und dgl. möglich ist.

Bei Ausführungsbeispielen der Erfindung werden die Werkstücke optisch überprüft.

Diese Maßnahme hat den Vorteil, daß die Überprüfung entweder durch den Einrichter selbst oder durch einfache Meßgeräte vorgenommen werden kann.

Bei Ausführungsbeispielen der Erfindung werden die Werkstücke mittels Fremdkraft im Werkstückträgersystem gehalten und über die Wirkung der Fremdkraft überprüft.

Diese Maßnahme hat den Vorteil, daß eine weitgehend automatisierte Überprüfung der Werkstücke möglich ist, insbesondere im Hinblick darauf, ob sich in sämtlichen Aufnahmen des Werkstückträgersystems auch Werkstücke befinden. Man kann daher in sehr einfacher und automatisierbarer Weise feststellen, ob alle Formhohlräume des Werkzeugs mit Kunststoff ausgespritzt wurden.

Bei einer besonders bevorzugten Variante dieses Ausführungsbeispiels werden die Werkstücke mittels Unterdruck im Werkstückträgersystem gehalten und der Unterdruck wird in einem Leitungssystem des Werkstückträgersystems überprüft.

Diese Maßnahme hat den Vorteil, daß eine besonders einfache Überprüfung möglich ist. Wenn nämlich z.B. ein Formhohlraum des Werkzeugs nicht ausgespritzt wurde und damit auch die zugehörige Aufnahme des Werkstückträgersystems nicht mit einem Werkstück versehen wird, so kann dort ungehindert Luft in das Leitungssystem einströmen, mit der Folge, daß der Unterdruck im Leitungssystem einen von einem Normwert abweichenden Wert aufweist. Dieser abweichende Wert kann mittels eines Druckgebers leicht erfaßt und einem Störungsmelder zugeführt werden.

Besonders bevorzugt ist, wenn das Werkstückträgersystem in mehreren Achsen verfahrbar ist.

Diese Maßnahme hat den Vorteil, daß der Aufwand im Werkzeug selbst verringert werden kann.

Bevorzugt ist besonders, wenn die Werkstücke mittels Austoßern aus dem Werkzeug entformt und dem Werkstückträgersystem übergeben werden.

In diesem Falle ist es unter Inkaufnahme eines gewissen Mehraufwandes im Werkzeug möglich, das Werkstückträgersystem nur in einer radialen Richtung zur Öffnungsachse des Werkzeugs einzufahren und auszufahren. Auf diese Weise wird die Bewegungssteuerung des Werkstückträgersystems vereinfacht.

Weitere Vorteile ergeben sich aus der Beschreibung und den beigefügten Zeichnungen.

Es zeigen:
- Fig. 1: eine perspektivische, stark schematisierte Ansicht eines Werkstückträgersystems, wie es zur Durchführung des erfindungsgemäßen Verfahrens verwendet werden kann;
- Fig. 2: eine äußerst schematisierte Draufsicht auf ein geöffnetes Werkzeug einer Kunststoff-Spritzgießmaschine zur Veranschaulichung einer ersten Folge von Arbeitsschritten;
- Fig. 3: eine Darstellung, ähnlich Fig. 2, jedoch zur Veranschaulichung einer zweiten Folge von Arbeitsschritten;
- Fig. 4: ein Geschwindigkeits-/Zeitdiagramm zur Erläuterung einer ersten Phase des erfindungsgemäßen Verfahrens;
- Fig. 5: eine Darstellung, ähnlich Fig. 4, jedoch zur Darstellung einer Zwischenphase des erfindungsgemäßen Verfahrens; und
- Fig. 6: eine Darstellung, ähnlich Fig. 4 und 5, jedoch zur Darstellung einer zweiten Phase des erfindungsgemäßen Verfahrens.

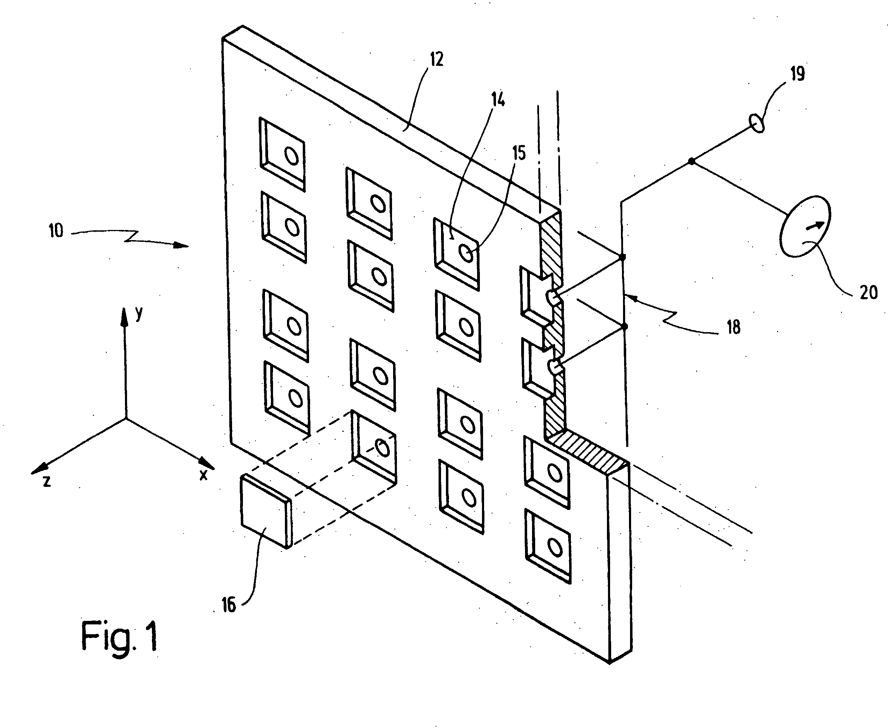

In Fig. 1 bezeichnet 10 insgesamt ein Werkstückträgersystem, wie es innerhalb eines Handlingsystems einer an sich bekannten Kunststoff-Spritzgießmaschine eingesetzt werden kann. Kunststoff-Spritzgießmaschinen der hier interessierenden Art sind allgemein bekannt und brauchen daher nicht näher erläutert zu werden.

Das Werkstückträgersystem 10 verfügt über eine Trägerplatte 12, die mittels nicht dargestellter Verfahreinheiten in mehreren Koordinatenrichtungen x, y und z verfahrbar ist.

Die Trägerplatte 12 weist eine Vielzahl von Ausnehmungen 14 auf, die jeweils der Form der herzustellenden Werkstücke angepaßt ist. Im dargestellten Ausführungsbeispiel ist jede Ausnehmung 14 rückseitig mit einem Kanal 15 verbunden. Um Werkstücke 16 in den Ausnehmungen 14 zu halten, sind die Kanäle 15 an ein Leitungssystem 18 angeschlossen. Das Leitungssystem 18 führt insgesamt zu einem Vakuumanschluß 19. Der Druck im Leitungssystem 18 kann mittels einer Vakuum-Kontrollanzeige 20 überwacht werden.

Wenn sich in sämtlichen Ausnehmungen 14 die zugehörigen Werkstücke 16 befinden, so können die Werkstücke 16 durch Anlegen eines Unterdrucks im Leitungssystem 18 gehalten werden. Sollte jedoch eine oder mehrere der Ausnehmungen 14 infolge einer Störung nicht mit einem Werkstück 16 bestückt sein, so wird der Aufbau des Unterdrucks im Leitungssystem 18 dadurch behindert, weil in der betreffenden Ausnehmung 14 der zugehörige Kanal 15 das Leitungssystem 18 mit dem Umgebungsdruck verbindet. Die Vakuum-Kontrollanzeige 20 wird in diesem Fall eine Störung erkennen, weil sich kein hinreichend großer Unterdruck im Leitungssystem 18 ausbilden kann. Die Vakuum-Kontrollanzeige 20 ist zu diesem Zweck mit einem nicht dargestellten Alarmsystem verbunden.

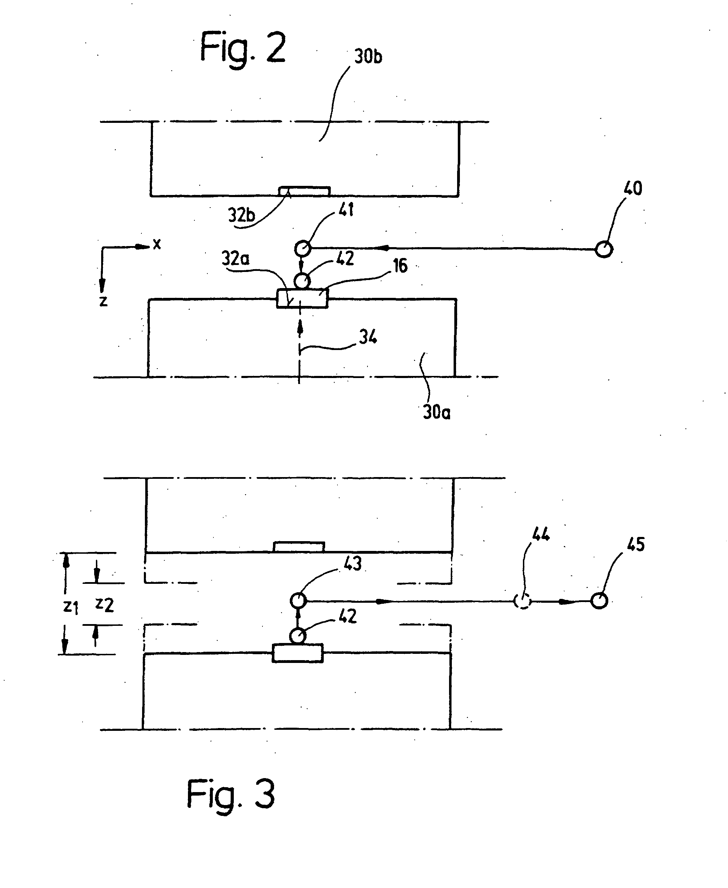

Fig. 2 zeigt in einer Draufsicht zwei äußerst schematisierte Werkzeughälften 30a, 30b, die jeweils mit Formhohlräumen 32a, 32b versehen sind.

Die Werkzeughälften 30a, 30b befinden sich im geöffneten Zustand. Zuvor wurde der Formhohlraum 32a, 32b mit Kunststoff ausgespritzt. Die Anordnung ist dabei so getroffen, daß das hergestellte Werkstück 16 sich im Formhohlraum 32a der Werkzeughälfte 30a befindet. All dies ist selbstverständlich nur beispielhaft zu verstehen.

Um das Werkstück 16 auszuformen und aus dem Werkzeug 30a, 30b zu entnehmen, fährt nun ein Handlingsystem mit einem Werkstückträgersystem 10 gemäß Fig. 1 seitlich in den Zwischenraum zwischen den Werkzeughälften 30a, 30b ein. Die Werkzeughälften 30a, 30b sind dabei um einen relativ großen Öffnungshub Z₁ beabstandet, der im späteren Automatikbetrieb der Maschine auf Z₂ verringert werden kann.

Die Bewegung geht dabei von einer ersten Position 40 im seitlichen Abstand von den Werkzeughälften 30a, 30b aus. Das Werkstückträgersystem 10 fährt nun in Richtung -x zwischen die Werkzeughälften 30a, 30b ein; bis eine zweite Position 41 erreicht ist. Von dort verfährt das Werkstückträgersystem 10 in z-Richtung bis zu einer dritten Entnahmeposition 42. In der dritten Entnahmeposition 42 wird das Werkstück 16 übernommen. Hierzu wird das Werkstück 16 entweder vom Werkzeugträgersystem 10 ergriffen oder mittels Ausstoßern aus der entsprechenden Werkzeughälfte 30a ausgestoßen, wie mit einem Pfeil 34 in Fig. 2 angedeutet.

Fig. 3 zeigt nun, daß sich das Werkstückträqersystem 10 zunächst in Richtung -z bis zu einer vierten Zwischenposition 43 bewegt und dann in x-Richtung aus den Werkzeughälften 30a, 30b heraus bis zu einer fünften Zwischenposition 44 (fakultativ) und schließlich zu einer sechsten Position 45, die mit der ersten Position 40 übereinstimmt.

Der vorstehend dargestellte Bewegungsablauf ist an sich bekannt, wird im Stand der Technik aber nur zum Ausformen bzw. Entnehmen von Werkstücken während des Normalbetriebes der Kunststoffspritzgießmaschine eingesetzt.

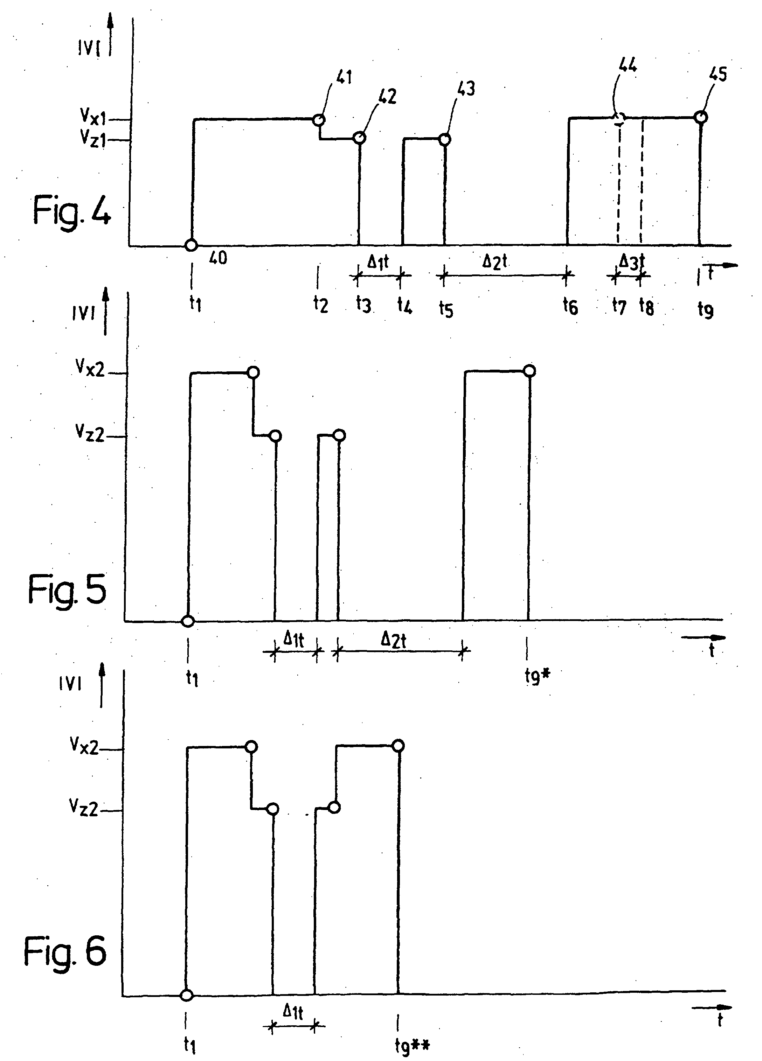

Die Besonderheit des erfindungsgemäßen Verfahrens liegt darin, daß dieser Bewegungsablauf auch beim Anfahren der Kunststoff-Spritzgießmaschine eingesetzt wird, und zwar vom ersten Probezyklus an, der zunächst nur dazu dient, die Funktionsweise des Spritzvorganges in der Maschine zu testen. Zu diesem Zweck wird der Bewegungsablauf in zeitlicher Hinsicht noch modifiziert, wie anhand der Fig. 4 bis 6 nun erläutert werden soll:

Fig. 4 zeigt hierzu den Betrag der Geschwindigkeit v des Werkstückträgersystems 10 über der Zeit t.

Man erkennt, daß zum Zeitpunkt t₁ das Werkstückträgersystem 10 aus der ersten Position 40 mit einer Geschwindigkeit vₓ₁ einfährt, bis zum Zeitpunkt t₂ die zweite Position 41 erreicht ist. Der sich daran anschließende Bewegungsvorgang in z-Richtung läuft normalerweise bei geringerer Geschwindigkeit v_{z1} ab, bis die dritte Entnahmeposition 42 zum Zeitpunkt t₃ erreicht ist. Dieser Anteil des Bewegungsablaufes von t₂ bis t₃ kann natürlich entfallen, wenn die Werkstücke 16 durch werkzeugeigene Mittel an das seitlich eingefahrene Werkstückträgersystem 10 übergeben werden.

Für das Entformen bzw. die Übergabe des Werkstücks 16 ist nun von t₃ bis t₄ ein Zeitintervall Δ₁t vorgesehen. Das Zeitintervall Δ₁t ist vom jeweiligen Übergabe- bzw. Entformmechanismus abhängig und kann im Extremfall nahezu Null betragen.

Sobald das Werkstück 16 vom Werkstückträgersystem 10 aufgenommen wurde, bewegt sich dieses ab dem Zeitpunkt t₄ wieder zurück von der dritten Entnahmeposition 42 in die vierte Zwischenposition 43 (vgl. Fig. 3). Die vierte Position 43 wird im Zeitpunkt t₅ erreicht.

An den Zeitpunkt t₅ schließt sich nun ein zweites Zeitintervall Δ₂t an, während dessen Verlauf das Werkstückträgersystem 10 in der vierten Zwischenposition 43 verharrt. Der Einrichter der Maschine kann nun die im Werkstückträgersystem 10 aufgenommenen Werkstücke 16 betrachten und überprüfen, und zwar sowohl hinsichtlich ihrer Beschaffenheit wie auch hinsichtlich ihrer Vollständigkeit. Aus der Darstellung gemäß Fig. 1 ist leicht erkennbar, daß diese Überprüfung relativ schnell vonstatten gehen kann, weil sich die Werkstücke 16 in geordneter Weise auf der Trägerplatte 12 des Werkstückträgersystems 10 befinden, bspw. in der dargestellten cartesischen Anordnung.

Wenn das Zeitintervall Δ₂ₜ abgelaufen ist, wird ab dem Zeitpunkt t₆ das Werkstückträgersystem 10 wieder ausgefahren, und zwar von der Zwischenposition Position 43 in x-Richtung nach außen. Bei manchen Anwendungsfällen kann das Werkstückträgersystem 10 in einer Zwischenposition Position 44, nämlich einer Zwischenposition zum Zeitpunkt t₇ nochmals kurz angehalten werden, und zwar für ein Zeitintervall Δ₃ₜ, um ggf. eine weitere Überprüfung durchzuführen. Diese weitere Überprüfung kann z.B. mittels Sensoren stattfinden, die aus Platzgründen nur außerhalb der Werkzeughälften 30a, 30b einsetzbar sind. Auch eine Kontrolle des angelegten Vakuums im Leitungssystem 18 kann z.B. in der Zwischenposition 44 durchgeführt werden.

Sobald dieses fakultative weitere Zeitinterval Δ₃ₜ im Zeitpunkt t₈ abgelaufen ist, bewegt sich das Werkstückträgersystem 10 weiter nach außen, bis die sechste Position 45, nämlich die Endposition, erreicht ist.

In Fig. 4 sind die Geschwindigkeiten in x-Richtung jeweils vₓ₁ und die Geschwindigkeiten in z-Richtung jeweils mit v_{z1} bezeichnet. Es versteht sich dabei, daß die dargestellten Geschwindigkeitsprofile nur beispielhaft zu verstehen sind und daß selbstverständlich auch nichtlineare Profile oder sonstwie variierte Profile eingesetzt werden können, solange nur die dargestellte Pause in Gestalt des Zeitintervalls Δ₂ₜ eingehalten wird.

Wenn der erste so abgelaufene Zyklus ergibt, daß noch Nachstellarbeiten an der Maschine erforderlich sind, so wird der Einrichter diese Nachstellarbeiten durchführen und dann einen zweiten derartigen Zyklus gemäß Fig. 4 fahren. Dies wiederholt sich so oft, bis sämtliche Werkstücke 16 im Werkstückträgersystem 10 einwandfrei hergestellt wurden. In einer Zwischenphase kann nun gemäß Fig. 5 zunächst nur die Arbeitsgeschwindigkeit, d.h. die Bewegungsgeschwindigkeit des Werkstückträgersystems 10 in x- und z-Richtung erhöht werden. Dies ist in Fig. 5 durch erhöhte Geschwindigkeit vₓ₂ und v_{z2} angedeutet. Im übrigen ist der Zeitverlauf unverändert, insoweit als die erforderlichen Zeitintervalle Δ₁t, Δ₂t im Zeitmaßstab. unverändert geblieben sind. Die Gesamt-Zykluszeit von t₁ bis nunmehr t₉* hat sich dagegen verkürzt, weil die Verfahrzeiten in x- und z-Richtung verkürzt wurden.

Wenn der Einrichter auch nach Durchlauf dieser Zwischenphase in einem oder mehreren Zyklen feststellt, daß keine Störungen auftreten, so kann er auf Automatikbetrieb umschalten. Dies ist in Fig. 6 dargestellt.

Wie man leicht erkennen kann, ist im Betrieb gemäß Fig. 6 das Überprüfungsintervall Δ₂ₜ entfallen, so daß die gesamte Zykluszeit von t₁ bis nunmehr t₉** nochmals verringert werden konnte.

Auch sind naturgemäß zahlreiche Varianten möglich. So kann man bspw. die Maschine zunächst gemäß Fig. 6 mit Geschwindigkeiten vₓ₂, v_{z2} betreiben, die immer noch deutlich unterhalb der maximal möglichen Arbeitsgeschwindigkeiten liegen. Erst wenn nach einer gewissen Anzahl von N Zyklen festgestellt wird (vgl. DE 42 19 687 C2), daß keine Störung auftritt, kann auf eine nochmals höhere Arbeitsgeschwindigkeit umgeschaltet werden.

## Patentansprüche

1. Verfahren zum Spritzgießen von Werkstücken (16) mit einem Werkzeug (30a, 30b) einer Kunststoff-Spritzgießmaschine, mit den Schritten:
a) probeweises Spritzen eines Werkstücks in dem Werkzeug (30a, 30b);
b) Öffnen des Werkzeugs (30a, 30b);
c) Entformen des Werkstücks aus dem Werkzeug (30a, 30b) in eine Entnahmeposition (42) mittels eines motorisch betätigbaren Werkstückträgersystems (10);
d) Verfahren des Werkstückträgersystems (10) mit einer ersten Geschwindigkeit (V_{z1}) aus der Entnahmeposition (42) in eine Zwischenposition (43, 44);
e) Anhalten des Werkstückträgersystems (10) in der Überprüfungsposition (43, 44) für eine vorbestimmte Zeit (Δ₂ₜ, Δ₃ₜ);
f) Überprüfen der Werkstücks auf dem Werkstückträgersystems (10) in der zwischenposition (43, 44) während der vorbestimmten Zeit der (Δ₂ₜ, Δ₃ₜ);
g) Verfahren des Werkstückträgersystems (10) mit einer zweiten Geschwindigkeit (vₓ₁) in eine Endposition (45);
h) mehrmaliges Wiederholen der schritte a) bis g) bis ein Einrichter keine Störungen feststellt, wobei die erste und zweite Geschwindigkeit (v_{z1}, vₓ₁) schrittweise erhöht werden;
i) serienmäßiges Spritzen eines Werkstücks in dem Werkzeug (30a, 30b);
j) Öffnen des Werkzeugs (30a, 30b);
k) Entformen des Werkstücks aus dem Werkzeug (30a, 30b) mittels des motorisch betätigbaren Werkstückträgersystems (10);
l) Verfahren des Werkstückträgersystems (10) mit einer dritten Geschwindigkeit (v_{z2}) in die Zwischenposition (43, 44) wobei die dritte Geschwindigkeit (v_{z2}) größer als die erste Geschwindigkeit (v_{z1}) ist;
m) Verfahren des Werkstückträgersystems (10) mit einer vierten Geschwindigkeit (Vₓ₂) in die Endposition (45), wobei die vierte Geschwindigkeit (V_{z2}) größer als die zweite Geschwindigkeit (Vₓ₁) ist; und
n) n-maliges Wiederholen der Schritte h) bis l) zum serienmäßige Herstellen des Werkstücks.

2. Verfahren nach Anspruch 1, **dadurch gekennzeichnet, daß** im Schritt d) das Werkstückträgersystem (10) in der Zwischen position (43) zwischen zwei Werkzeughälften (30a, 30b) angehalten. wird.

3. Verfahren nach Anspruch 1, **dadurch gekennzeichnet daß** im schritt d) das Werkstückträgersystem (10) in der Zwischenposition (44) neben dem Werkzeug (30a, 30b) angehalten wird.

4. Verfahren nach einem oder mehreren der Ansprüche 1 bis 3, **dadurch gekennzeichnet, daß** das Werkstückträgersystem (10) an zwei Zwischenpositionen (43, 44) angehalten wird.

5. Verfahren nach einem oder mehreren der Ansprüche 1 bis 4, **dadurch gekennzeichnet, daß** die Werkzeughälften (30a, 30b) in Schritt f) um einen ersten Abstand (z₁) und in Schritt k) um einen zweiten, kleineren Abstand (z₂) in der Offenstellung beabstandet sind.

6. Verfahren nach einem oder mehreren der Ansprüche 1 bis 5, **dadurch gekennzeichnet, daß** die Werkstücke (16) optisch überprüft werden.

7. Verfahren nach einem oder mehreren der Ansprüche 1 bis 6, **dadurch gekennzeichnet, daß** die Werkstücke (16) mittels Fremdkraft im Werkstückträgersystem (10) gehalten und über die Wirkung der Fremdkraft überprüft werden.

8. Verfahren nach Anspruch 7, **dadurch gekennzeichnet, daß** die Werkstücke (16) mittels Unterdruck im Werkstückträgersystem (10) gehalten werden und der Unterdruck in einem Leitungssystem (18) des Werkstückträgersystems (10) überprüft wird.

9. Verfahren nach einem oder mehreren der Ansprüche 1 bis 8, **dadurch gekennzeichnet, daß** das Werkstückträgersystem (10) in mehreren Achsen (x, z) verfahrbar ist.

10. Verfahren nach einem oder mehreren der Ansprüche 1 bis 9, **dadurch gekennzeichnet, daß** die Werkstücke (16) mittels Ausstoßern (34) aus dem Werkzeug (30a, 30b) entformt und dem Werkstückträgersystem (10) übergeben werden.

## Claims

1. Method for injection moulding workpieces (16) with a mould (30a, 30b) of a plastics injection moulding machine comprising the steps:
a) trial injection of a workpiece in the mould (30a, 30b);
b) opening the mould (30a, 30b);
c) demoulding the workpiece from the mould (30a, 30b) into a removal position (42) by means of a workpiece carrier system (10) which can be actuated by a motor;
d) moving the workpiece carrier system (10) at a first speed (V_{z1}) from the removal position (42) into an intermediate position (43, 44);
e) stopping the workpiece carrier system (10) in the inspection position (43, 44) for a predetermined time (Δ₂ₜ, Δ₃ₜ) ;
f) inspecting the workpiece on the workpiece carrier system (10) in the intermediate position (43, 44) during the predetermined time of (Δ₂ₜ, Δ₃ₜ) ;
g) moving the workpiece carrier system (10) at a second speed (Vₓ₁) into an end position (45);
h) frequent repetition of the steps a) to g) until a machine setter does not ascertain any disturbances, the first and second speed (v_{z1}, vₓ₁) being increased in steps;
i) standard injection of a workpiece in the mould (30a, 30b);
j) opening the mould (30a, 30b);
k) demoulding the workpiece from the mould (30a, 30b) by means of the workpiece carrier system (10) which can be actuated by a motor;
l) moving the workpiece carrier system (10) at a third speed (v_{z2}) into the intermediate position (43, 44), the third speed (v_{z2}) being greater than the first speed (v₂₁);
m) moving the workpiece carrier system (10) at a fourth speed (vₓ₂) into the end position (45), the fourth speed (v_{z2}) being greater than the second speed (Vₓ₁) ; and
n) n-times repetition of the steps h) to 1) for standard production of the workpiece.

2. Method according to claim 1, **characterised in that** the workpiece carrier system (10) is stopped in the intermediate position (43) between two mould halves (30a, 30b) in step d).

3. Method according to claim 1, **characterised in that** the workpiece carrier system (10) is stopped in the intermediate position (44) next to the mould (30a, 30b) in step d).

4. Method according to any one or more of claims 1 to 3, **characterised in that** the workpiece carrier system (10) is stopped at two intermediate positions (43, 44).

5. Method according to any one or more of claims 1 to 4, **characterised in that** the mould halves (30a, 30b) are spaced by a first spacing (z₁) in step f) and by a second smaller spacing (z₂) in the open position in step k).

6. Method according to any one or more of claims 1 to 5, **characterised in that** the workpieces (16) can be visually inspected.

7. Method according to any one or more of claims 1 to 6, **characterised in that** the workpieces (16) are held in the workpiece carrier system (10) by means of extraneous force and are inspected by the action of the extraneous force.

8. Method according to claim 7, **characterised in that** the workpieces (16) are held in the workpiece carrier system (10) by means of a vacuum and the vacuum is inspected in a line system (18) of the workpiece carrier system (10).

9. Method according to any one or more of claims 1 to 8, **characterised in that** the workpiece carrier system (10) can be moved in a plurality of axes (x, z).

10. Method according to any one or more of claims 1 to 9, **characterised in that** the workpieces (16) are demoulded from the mould (30a, 30b) by means of ejectors (34) and transferred to the workpiece carrier system (10).

## Revendications

1. Procédé de moulage par injection de pièces (16) avec un outil (30a, 30b) d'une machine de moulage par injection de matière plastique, comportant les étapes suivantes :
a) on injecte à titre d'essai une pièce dans l'outil (30a, 30b) ;
b) on ouvre l'outil (30a, 30b) ;
c) on démoule la pièce hors de l'outil (30a, 30b) dans une position d'enlèvement (42) au moyen d'un système porte-pièce (10) susceptible d'être actionné de manière motorisée ;
d) on déplace le système porte-pièce (10) à une première vitesse (V_{z1}) depuis la position d'enlèvement jusque dans une position intermédiaire (43, 44) ;
e) on maintient le système porte-pièce (10) dans la position intermédiaire (43, 44) pendant une durée prédéterminée (Δ₂ₜ, Δ₃ₜ);
f) on vérifie la pièce sur le système porte-pièce (10) dans la position intermédiaire (43, 44) pendant la durée prédéterminée (Δ₂ₜ, Δ₃ₜ) ;
g) on déplace le système porte-pièce (10) à une seconde vitesse (Vₓ₁) jusque dans une position finale (45) ;
h) on répète plusieurs fois les étapes a) à g) jusqu'à ce qu'un contrôleur ne constate aucune perturbation, en augmentant la première et la seconde vitesse (V_{z1}, Vₓ₁) pas à pas ;
i) on injecte en série une pièce dans l'outil (30a, 30b) ;
j) on ouvre l'outil (30a, 30b) ;
k) on démoule la pièce hors de l'outil (30a, 30b) au moyen du système porte-pièce (10) actionné de manière motorisée ;
l) on déplace le système porte-pièce (10) à une troisième vitesse (V_{z2}) jusque dans la position intermédiaire (43, 44), ladite troisième vitesse (V_{z2}) étant supérieure à la première vitesse (V_{z1}) ;
m) on déplace le système porte-pièce (10) à une quatrième vitesse (Vₓ₂) jusque dans la position finale (45), ladite quatrième vitesse (Vₓ₂) étant supérieure à la seconde vitesse (Vₓ₁) ; et
n) on répète n fois les étapes i) à m) pour la fabrication en série de la pièce.

2. Procédé selon la revendication 1, **caractérisé en ce que**, dans l'étape d), le système porte-pièce (10) est maintenu dans la position intermédiaire (43) entre deux moitiés d'outil (30a, 30b).

3. Procédé selon la revendication 1, **caractérisé en ce que**, dans l'étape d), le système porte-pièce (10) est maintenu dans la position intermédiaire (44) à côté de l'outil (30a, 30b).

4. Procédé selon l'une ou plusieurs des revendications 1 à 3, **caractérisé en ce que** le système porte-pièce (10) est maintenu à deux positions intermédiaires (43, 44).

5. Procédé selon l'une ou plusieurs des revendications 1 à 4, **caractérisé en ce que** les moitiés d'outil (30a, 30b) sont écartées d'une première distance (z1 ) à l'étape f), et sont écartées d'une seconde distance (z2) plus petite à l'étape k) dans la position ouverte.

6. Procédé selon l'une ou plusieurs des revendications 1 à 5, **caractérisé en ce que** les pièces (16) sont vérifiées par voie optique.

7. Procédé selon l'une ou plusieurs des revendications 1 à 6, **caractérisé en ce que** les pièces (16) sont maintenues dans le système porte-pièce (10) au moyen d'une force extérieure, et vérifiées par l'intermédiaire de l'effet de la force extérieure.

8. Procédé selon la revendication 7, **caractérisé en ce que** les pièces (16) sont maintenues dans le système porte-pièce (10) au moyen d'une dépression, et **en ce que** la dépression est vérifiée dans un système de conduites (18) du système porte-pièce (10).

9. Procédé selon l'une ou plusieurs des revendications 1 à 8, **caractérisé en ce que** le système porte-pièce (10) est déplaçable suivant plusieurs axes (x, z).

10. Procédé selon l'une ou plusieurs des revendications 1 à 9, **caractérisé en ce que** les pièces (16) sont démoulées hors de l'outil (30a, 30b) au moyen d'éjecteurs (34) et sont transmises au système porte-pièce (10).
